# EUROPÄISCHE PATENTSCHRIFT

(11) **EP 3 812 123 B1**
(45) Veröffentlichungstag und Bekanntmachung des Hinweises auf die Patenterteilung: **14.06.2023**
(21) Anmeldenummer: 20202911.2
(22) Anmeldetag: 20.10.2020
(51) Int. Cl.: B29C 48/90, B29C 48/09

(54) **KALIBRIERVORRICHTUNG FÜR DEN EINSATZ IN EINER EXTRUDIERANLAGE FÜR KUNSTSTOFFROHRE UND EXTRUDIERANLAGE**
EXTRUSION SYSTEM AND CALIBRATION DEVICE FOR USE IN AN EXTRUSION SYSTEM FOR PLASTIC PIPES
DISPOSITIF D'ÉTALONNAGE POUR UNE UTILISATION DANS UNE INSTALLATION D'EXTRUSION POUR TUYAUX EN MATIÈRE PLASTIQUE ET INSTALLATION D'EXTRUSION

(30) Priorität: 21.10.2019 DE 202019105842 U
(43) Veröffentlichungstag der Anmeldung: 28.04.2021
(73) Patentinhaber: WRS GmbH, 32547 Bad Oeynhausen (DE)
(72) Erfinder: NEUMANN, Ulrich, 32547 Bad Oeynhausen (DE)
(74) Vertreter: Feucker, Max Martin

(56) Entgegenhaltungen:
- EP-A1- 1 800 833
- EP-A1- 1 803 540
- DE-A1-102009 041 628
- DE-U1- 20 317 940
- US-A- 2 981 975

## Beschreibung

Die vorliegende technische Lehre betrifft eine Kalibrierungsvorrichtung für den Einsatz in einer Extrudieranlage für Kunststoffrohre so wie eine Extrudieranlage mit einer entsprechenden Kalibriervorrichtung.

Eine solche Extrudieranlage umfasst insbesondere einen Extruder und eine nachgelagerte Durchlaufkühlkammer für die extrudierten Rohre, wobei sich die Kalibriervorrichtung mit ihrer Kalibrierhülse zumindest teilweise in die Durchlaufkühlkammer erstreckt. Die Durchlaufkühlkammer ist insbesondere als Vakuumkammer ausgebildet, in der die in der Durchlaufkühlkammer befindliche Außenseite der Kalibrierhülse mit einem Kühlmittel (Wasser) besprüht wird.

Die Kalibriervorrichtung ist insbesondere mittels einer Halterung an einer Außenseite der Durchlaufkühlkammer angebracht, wobei ein dem Extruder zugewandtes Einlassende der Kalibriehülse noch außerhalb der Durchlaufkühlkammer angeordnet ist, während das Auslassende der Kalibrierhülse innerhalb der Durchlaufkühlkammer angeordnet ist.

Es ist nun bekannt, dass die Kalibrierhülse sich zumindest abschnittsweise entlang der Axialrichtung der Kalibrierhülse erstreckende (beispielsweise zickzackförmig oder gewellt ausgeführte) Schlitze aufweist, so dass ein Innendurchmesser der Kalibrierhülse mittels einer Einstelleinrichtung in gewissen Grenzen verändert werden kann.

Aus EP 1 048 434 A2 ist beispielsweise eine Kalibriervorrichtung mit einer in ihrem Durchmesser variabel einstellbaren Kalibrierhülse Eine weitere Kalibrierhülse ist aus EP 1 800 833 A1 bekannt. Aus DE 203 17 940 U1 ist eine Kalibrierhülse mit den Merkmalen des Oberbegriffs des Anspruchs 1 bekannt, da ein Spannband oder ein Spanndraht die Kalibrierhülse im Bereich ihres Austrittsendes für das extrudierte Rohr zur Einstellung des Durchmessers umschließt.

Ferner ist es bekannt, dass die Halterung der Kalibrierhülse derart ausgebildet ist, dass um den außerhalb der Durchlaufkühlkammer angeordneten Bereich der Kalibrierhülse eine insbesondere in Umfangsrichtung durchgehend verlaufende Wasser-/Kühlkammer zur Einlaufkühlung ausgebildet ist.

Aus EP 1 291 152 A1 ist beispielsweise eine Kalibriervorrichtung mit einer Intensivkühlung für die Kalibrierhülse bekannt. Die Halterung übergreift hierbei die dem Extruder zugewandte Stirnseite der Kalibrierhülse.

Die vorliegende technische Lehre beschäftigt sich nun damit, eine Kalibriervorrichtung zu verbessern. Insbesondere soll die Einstellbarkeit des Innendurchmessers der Kalibrierhülse mit einem geringeren apparativen Aufbau erzielt werden. Gemäß einem weiteren Aspekt soll die (Einlauf-)Kühlung der Kalibrierhülse an ihrem einlassseitigen Ende verbessert werden. Noch ein weiterer Aspekt beschäftigt sich mit der Anbringung der Kalibrierhülse an die Halterung.

In der nachfolgenden und vorstehenden Beschreibung sowie in den abhängigen Ansprüchen sind zudem vorteilhafte Weiterbildungen der Kalibriervorrichtung wiedergegeben, wobei einzelne Merkmale der vorteilhaften Weiterbildungen in technisch sinnvoller Weise beliebig miteinander kombinierbar sind.

Die Erfindung betrifft in ihrer allgemeinsten Form eine Kalibriervorrichtung für den Einsatz in einer Extrudieranlage für Kunststoffrohre, umfassend eine Kalibrierhülse mit einem Innendurchmesser und einer Einstelleinrichtung zum stufenlosen Einstellen des Innendurchmessers der Kalibrierhülse, wobei die Einstelleinrichtung eine Seilverstellung umfasst. Der Aufwand für die Realisierung einer Seilverstellung und ihrer Betätigung ist wesentlich geringer als für die Realisierung der herkömmlichen Mechaniken zur Änderung des Innendurchmessers der Kalibrierhülse. Eine solche Seilverstellung ist auch für Kunststoffrohre mit relativ kleinem Durchmesser und für die Mehrfachstrangextrusion geeignet. Eine Seilverstellung hat zudem den weiteren Vorteil, dass diese insbesondere im Bereich der Halterung relativ raumsparend ausgebildet sein kann, so dass mehr Platz für leistungssteigernde Maßnahmen der Kühlung bereitsteht.

Die Seilverstellung umfasst ein das Seil realisierendes Bauteil, wie beispielsweise einen Draht, sowie erfindungsgemäß mehrere Seilumlenkungen, beispielsweise Rollen.

Das insbesondere als Draht ausgebildete Seil ist dabei so angeordnet, dass es bei einer Betätigung der Einstelleinrichtung in eine Richtung die Kalibrierhülse in ihrem Durchmesser (stufenlos) verkleinert (komprimiert) und bei einer Betätigung in entgegengesetzter Richtung sich der Durchmesser der Kalibrierhülse vergrößert. Hierzu ist insbesondere vorgesehen, dass das Seil die Kalibrierhülse insbesondere an ihrem Austrittsende zumindest teilweise umgibt. Hierzu kann das Seil beispielsweise für mehr als 180°, bevorzugt für mehr als 270°, besonders bevorzugt für mehr als 360° mit einer Außenseite der Kalibrierhülse in Anlage sein. Hierbei kann das Seil insbesondere in einer auf der Außenseite der Kalibrierhülse ausgebildeten und insbesondere in Umfangsrichtung verlaufenden Nut bevorzugt im Bereich des Austrittsendes angeordnet sein.

Da das Austrittsende der Kalibrierhülse im montierten Zustand innerhalb der Durchlaufkühlkammer angeordnet ist, ist es wünschenswert, dass eine Betätigung der Seilverstellung von außerhalb der Kühlkammer erfolgen kann. Hierzu ist vorgesehen, dass die Seilverstellung Seilumlenkungen aufweist, mit denen das Seil von dem Austrittsende in Richtung der insbesondere am Einlassende der Kalibrierhülse ausgebildeten Halterung (beispielsweise Flansch) geführt ist. Prinzipiell wäre es möglich, dass das Seil durch die Halterung nach außen geführt ist.

Bevorzugt ist aber, dass das Seil zumindest mit einem Ende an eine Verstelleinrichtung angebracht ist, mit welcher das Seil von der Außenseite (auf der dem Extruder zugewandten Seite) durch die Halterung hindurch betätigtbar ist.

Für eine gleichmäßige Krafteinleitung auf das Austrittsende der Kalibrierhülse ist es vorteilhaft, wenn beide Enden des insbesondere vollständig durchgehend ausgebildeten Seiles mit der bevorzugt genau einen Verstelleinrichtung verbunden ist.

In einer Ausführungsform ist die Verstelleinrichtung als Schraube ausgebildet, an deren durchlaufkühlkammerseitigen Ende das Seil angebracht ist, so dass das Seil durch Betätigen des auf der Extruder-Seite der Halterung angeordneten Endes der Schraube betätigt werden kann. Die Verstelleinrichtung kann aber alternativ auch durch einen elektronisch ansteuerbaren Aktuator, wie Elektromotor, Kolben-/Zylindereinheit oder ähnlichem realisiert sein.

Zur Anordnung der Seilumlenkungen kann ein Gestell vorgesehen sein, das an der Halterung angebracht ist und die Seilumlenkungen trägt. Das Gestell umfasst insbesondere sich entlang der Kalibrierhülse zu dem Auslassende erstreckende Stangen, an deren Ende beispielsweise eine ringförmige Scheibe befestigt ist, die die Seilumlenkungen (Rollen) trägt.

Die weiteren Ausführungsformen betreffen die Einlaufkühlung der Kalibrierhülse und/oder die Befestigung der Kalibrierhülse an der Halterung. Hierbei weist die Kalibriervorrichtung insbesondere die Kalibrierhülse eine Halterung zur Anbringung der Kalibrierhülse an eine Durchlaufkühlkammer auf, wobei zwischen der Halterung und der Kalibrierhülse eine Wasserkammer zur Einlaufkühlung der Kalibrierhülse ausgebildet ist.

Die Halterung umfasst insbesondere einen Anschlussflansch, mit dem die Kalibriervorrichtung an der Durchlaufkühlkammer befestigt werden kann. Der Anschlussflansch weist insbesondere eine zentrale Öffnung auf, durch die sich die Kalibrierhülse erstreckt. Der Anschlussflansch kann aber auch durch eine Wandung der Durchlaufkühlkammer realisiert sein. Darüber hinaus umfasst die Halterung einen Befestigungsring, der an dem Anschlussflansch insbesondere durch Verschraubung befestigt wird und der zumindest indirekt die Kalibrierhülse mit dem Anschlussflansch verspannt. Wenn der Anschlussflansch durch eine Wandung der Durchlaufkühlkammer realisiert ist, wird der Befestigungsring mit der Wandung verschraubt.

Insbesondere der Befestigungsring ist so ausgebildet, dass die Wasserkammer ausgebildet wird, wobei die Wasserkammer radial außen von dem Befestigungsring und radial innen von der Kalibrierhülse begrenzt wird. An dem Befestigungsring sind Wasseranschlüsse angeordnet, mit denen Wasser in die Wasserkammer eingeleitet werden kann. Gemäß einer bevorzugten Ausführungsform können die Wasseranschlüsse so ausgebildet sein, dass das eingeleitete Wasser in Umfangsrichtung in der Wasserkammer strömt. Hierzu weisen die Wasseranschlüsse in einem in der Wasserkammer angeordneten Ende Öffnungen auf, die in Richtung der Umfangsrichtung der Kalibrierhülse gerichtet sind.

Die Kalibrierhülse und/oder die Halterung sind zudem insbesondere so ausgebildet, dass das in die Wasserkammer eingeleitete Wasser im montierten Zustand in die Durchlaufkühlkammer fließt.

Eine bevorzugte Ausführungsform sieht nun vor, dass die Kalibrierhülse einen radial nach außen vorspringenden Kragen aufweist, der zu einem einlassseitigen Stirnende der Kalibrierhülse versetzt ist, wobei die Halterung an dem Kragen angreift und die Wasserkammer zumindest teilweise in Richtung der Einlassseite zu dem Kragen angeordnet ist. Der Kragen weist also einen Abstand zu der einlassseitigen axialen Stirnfläche der Kalibrierhülse auf.

Der Kragen und die Halterung sind hierbei insbesondere so ausgebildet, dass der Kragen von einem Element der Halterung (beispielsweise direkt durch den Befestigungsring selbst oder durch einen Zwischenring) gegen ein weiteres Element (beispielsweise den Anschlussflansch) verspannt wird. Hierzu weist der Anschlussflansch insbesondere eine Aussparung auf, die eine axiale Anschlagsfläche für den Kragen bereitstellt, während der Befestigungsring oder der Zwischenring eine axial ausgerichtete Fläche aufweist, die im montierten Zustand mit einer in Richtung der Einlassseite ausgerichteten axialen Fläche des Kragens in Anlage ist.

Da somit die Kräfte über den Kragen in die Halterung geleitet werden, kann die Kalibrierhülse zwischen dem Kragen und dem Einlass eine wesentlich geringere Wandstärke aufweisen, so dass eine effektivere Kühlung der Kalibrierhülse im Einlassbereich möglich ist. Somit braucht aber auch nicht der Befestigungsring in axialer Richtung über die einlassseitige Stirnfläche der Kalibrierhülse überstehen, so dass auch hier vorteilhaftere (platzsparendere) Ausgestaltungen der Kalibriervorrichtung möglich sind.

Der Kragen kann dabei in Umfangsrichtung durchgehend ausgebildet sein, bevorzugt ist aber, dass der Kragen in Umfangsrichtung Aussparungen aufweist, durch die das Wasser von der Wasserkammer in die Durchlaufkühlkammer fließen kann.

Eine weitere bevorzugte Ausführungsform sieht vor, dass die Wasserkammer eine ringförmige Hauptkammer und eine sich von der Hauptkammer entlang der Kalibrierhülse erstreckende Leitkammer aufweist, wobei in die Hauptkammer Wasser einleitbar ist, welches aus der Hauptkammer in der Leitkammer entlang der Kalibrierhülse fließt. Die Leitkammer wird also durch einen Spalt ausgebildet, der sich zwischen Elementen der Halterung und der Kalibrierhülse von einem Abschnitt der Hauptkammer entlang der Kalibrierhülse erstreckt. Das durch die Leitkammer fließende Wasser weist daher eine relativ große Strömungsgeschwindigkeit auf, wodurch die Kühlung der Kalibrierhülse im Einlassbereich verbessert ist. Die die Leitkammer insbesondere zumindest abschnittsweise in radialer Richtung umgebene Hauptkammer sorgt hingegen für eine gleichmäßige und intensive Kühlung im äußeren Bereich der Halterung und/oder für eine gleichmäßige und intensive Kühlung der Kalibrierhülse (in Richtung zu der Einlassseite) vor der Leitkammer.

Bevorzugt weist die Leitkammer eine Höhe (in radialer Richtung der Kalibrierhülse) auf, die maximal 5 mm, besonders bevorzugt maximal 3 mm beträgt. Die Länge der Leitkammer (in axialer Richtung der Kalibrierhülse) beträgt hingegen mindestens das fünffache, bevorzugt mindestens das Zehnfache der Höhe.

Insbesondere bei Kunststoffrohren mit großem Durchmesser kann vorgesehen sein, dass in dem Spalt zwischen den Elementen der Halterung und der Kalibrierhülse mehrere, bevorzugt aus Kunststoff bestehende Einsätze eingebracht sind, so dass mehrere sich entlang der Kalibrierhülse erstreckende Kanäle die Leitkammer ausbilden. Alternativ könnten die Kanäle auch durch geeignete Formgebung der Kalibrierhülse und/oder der Elemente der Halterung ausgebildet werden.

In einer bevorzugten Ausführungsform weist die Halterung einen Zwischenring auf, der einerseits eine Klemmkraft von dem Befestigungsring auf den Kragen der Kalibrierhülse überträgt und der andererseits einen hülsenförmige Abschnitt aufweist, auf dessen (radialer) Innenseite die Leitkammer ausgebildet wird und der mit seiner (radialen) Außenseite die Hauptkammer abschnittsweise begrenzt. Die Hauptkammer erstreckt sich dabei bevorzugt in Richtung des Einlasses über den hülsenförmigen Abschnitt des Zwischenrings, so dass in diesem Bereich das Wasser aus der Hauptkammer in die Leitkammer fließen kann und eine intensive Kühlung der Kalibrierhülse stattfindet.

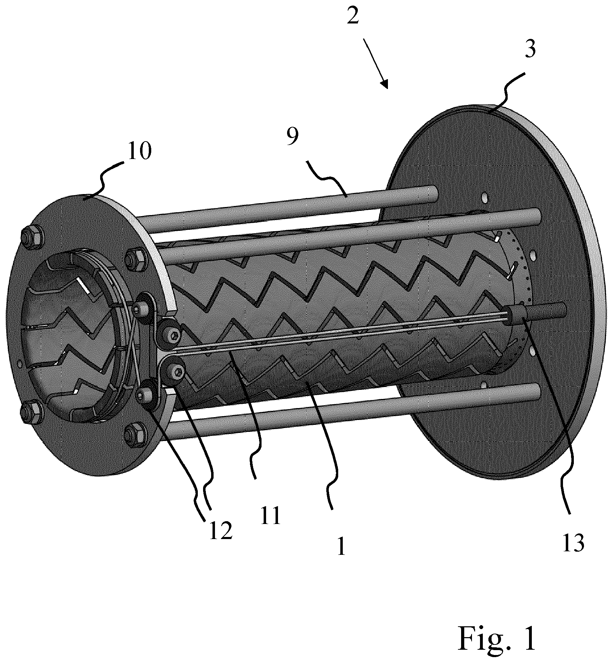

Die Erfindungen sowie das technische Umfeld werden im Folgenden anhand der Figuren beispielhaft erläutert. Die Figuren zeigen schematisch
- Figur 1:: eine Perspektivansicht einer Kalibriervorrichtung,
- Figur 2:: einen Längsschnitt durch die Kalibriervorrichtung und
- Figur 3:: eine Detailansicht des Längsschnitts im Bereich einer Halterung der Kalibriervorrichtung.

In den Figuren ist eine Kalibriervorrichtung dargestellt, die eine Kalibrierhülse 1, eine Halterung 2 zur Anbringung der Kalibrierhülse 1 an eine Durchlaufkühlkammer und eine Seilverstellung zur Änderung des Durchmessers der Kalibrierhülse 1 aufweist.

Die Kalibrierhülse 1 weist mehrere sich entlang der Längsachse der Kalibrierhülse 1 erstreckende, zickzackförmig Schlitze auf, so dass der Durchmesser der Kalibrierhülse 1 in einem gewissen Rahmen verändert werden kann. Die Einlassseite der Kalibrierhülse 1 befindet sich in den Figuren auf der rechten Seite und die Auslassseite auf der linken Seite.

Zur Änderung des Durchmessers der Kalibrierhülse 1 ist eine Seilverstellung vorgesehen, die ein Seil 11 sowie mehrere Rollen 12 aufweist. Die Rollen 12 sind an einer Scheibe 10 gelagert, welche mittels mehreren Stangen 9 an der Halterung 2 befestigt sind.

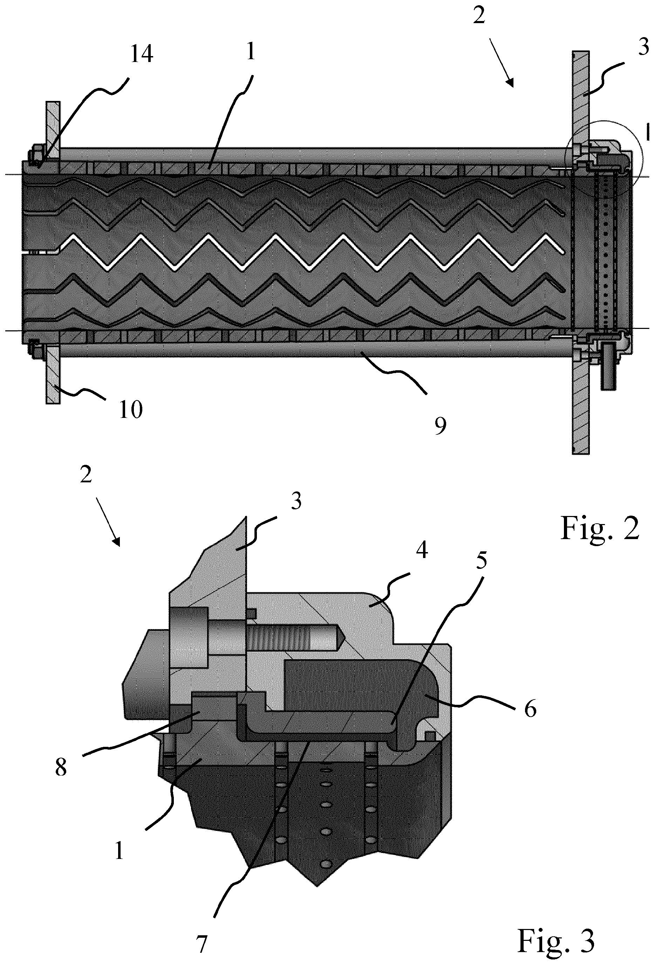

Das Seil 11 ist am auslassseitigen Ende der Kalibrierhülse 1 in einer Nut 14 (siehe auch Figur 2) angeordnet und umschlingt die Kalibrierhülse vollständig um 360°. Die Enden des Seils 11 sind an einer Verstelleinrichtung 13 befestigt, die als Schraube ausgebildet ist, die von dem einlassseitigen Ende der Halterung 2 aus betätigbar ist. So kann durch ein Betätigen der Verstelleinrichtung 13 das Seil 11 in Richtung der Halterung 2 gezogen werden, wodurch sich die Kalibrierhülse 1 an ihrem auslassseitigen Ende in ihrem Durchmesser verkleinern lässt.

Die Halterung 2 umfasst einen Anschlussflansch 3, einen Befestigungsring 4 und einen Zwischenring 5, die in Figur 3 im Detail dargestellt sind. In Figur 3 ist auch deutlich zu erkennen, dass die Kalibrierhülse 1 einen Kragen 8 aufweist, der von der einlassseitigen Stirnfläche der Kalibrierhülse 1 beabstandet ist. Der Kragen 8 erstreckt sich in Umfangsrichtung um die Kalibrierhülse 1 und weist Aussparungen auf, durch die Wasser hindurchfließen kann (siehe weiter unten).

Der Befestigungsring 4 ist mit dem Anschlussflansch 3 verschraubt und drückt das auslassseitige Ende des Zwischenringrings 5 gegen den Kragen 8, so dass die Kalibrierhülse 1 in der Halterung 2 verspannt ist. Somit werden die auf die Kalibrierhülse 1 wirkenden Kräfte im Bereich des Kragens 8 auf die Halterung 2 übertragen, so dass die Kalibrierhülse 1 in ihrem einlassseitigen Bereich eine geringere Wandstärke aufweisen kann, wodurch eine bessere Kühlung möglich ist.

In Figur 3 ist zudem zu erkennen, dass der Befestigungsring 4 so geformt ist, dass eine Hauptkammer 6 einer Wasserkammer ausgebildet wird. Der Zwischenring 5 ist zudem mit seinem einlassseitigen Ende hülsenförmig ausgebildet, so dass ein Spalt zwischen dem hülsenförmigen Abschnitt und der Kalibrierhülse 1 ausgebildet wird, wobei durch den Spalt eine Leitkammer 7 gebildet wird, in die Wasser aus der Hauptkammer 6 eintreten kann. Das Wasser fließt also durch den relativ niedrigen Spalt hin zu dem Kragen 8, wobei das Wasser durch die Aussparungen im Kragen 8 hindurch in die Durchlaufkühlkammer treten kann. Es ist somit eine sehr effektive Kühlung im Einlassbereich der Kalibrierhülse 1 möglich.

### Bezugszeichenliste

- 1: Kalibrierhülse
- 2: Halterung
- 3: Anschlussflansch
- 4: Befestigungsring
- 5: Zwischenring
- 6: Hauptkammer
- 7: Leitkammer
- 8: Kragen
- 9: Stange
- 10: Scheibe
- 11: Drahtseil
- 12: Rolle
- 13: Verstelleinrichtung
- 14: Nut

## Patentansprüche

1. Kalibriervorrichtung für den Einsatz in einer Extrudieranlage für Kunststoffrohre, umfassend
- eine Kalibrierhülse (1) mit einem Innendurchmesser und
- eine Einstelleinrichtung zum stufenlosen Einstellen des Innendurchmessers der Kalibrierhülse (1),
wobei die Einstelleinrichtung eine Seilverstellung umfasst,
**dadurch gekennzeichnet, dass** die Seilverstellung mehrere Seilumlenkungen (12) umfasst.

2. Kalibriervorrichtung nach Anspruch 1, wobei ein Seil (11) der Seilverstellung die Kalibrierhülse (1) an ihrem Austrittsende zumindest teilweise umgibt.

3. Kalibriervorrichtung nach Anspruch 2, wobei das Seil (11) an dem Austrittsende in einer an der Kalibrierhülse (1) in Umfangsrichtung verlaufenden Nut (14) geführt ist.

4. Kalibriervorrichtung nach einem der vorhergehenden Ansprüche, wobei beide Enden eines Seils (11) der Seilverstellung an einer gemeinsamen Verstelleinrichtung (13) angebracht sind.

5. Kalibriervorrichtung nach einem der vorhergehenden Ansprüche, umfassend
eine Halterung (2) zur Anbringung der Kalibrierhülse (1) an eine Durchlaufkühlkammer, wobei zwischen der Halterung (2) und der Kalibrierhülse (1) eine Wasserkammer (6, 7) ausgebildet ist,
**dadurch gekennzeichnet, dass**
die Kalibrierhülse (1) einen radial nach außen vorspringenden Kragen (8) aufweist, der zu einem einlassseitigen Stirnende der Kalibrierhülse (1) versetzt ist, wobei die Halterung (2) an dem Kragen (8) angreift und die Wasserkammer (6, 7) zumindest teilweise in Richtung der Einlassseite zu dem Kragen (8) angeordnet ist.

6. Kalibriervorrichtung nach einem der vorhergehenden Ansprüche, umfassendeine Halterung (2) zur Anbringung der Kalibrierhülse (1) an eine Durchlaufkühlkammer, wobei zwischen der Halterung (2) und der Kalibrierhülse (1) eine Wasserkammer (6, 7) ausgebildet ist,
**dadurch gekennzeichnet, dass**
die Wasserkammer eine ringförmige Hauptkammer (6) und eine sich von der Hauptkammer (6) entlang der Kalibrierhülse (1) erstreckende Leitkammer (7) aufweist, wobei in die Hauptkammer (6) Wasser einleitbar ist, welches aus der Hauptkammer (6) in der Leitkammer (7) entlang der Kalibrierhülse (1) fließt.

7. Kalibriervorrichtung nach Anspruch 6, wobei die Leitkammer (7) eine Höhe aufweist, die maximal 5 mm beträgt.

8. Kalibriervorrichtung nach Anspruch 7, wobei die Leitkammer (7) eine Länge aufweist, die mindestens das 5fache der Höhe beträgt.

9. Kalibriervorrichtung nach einem der Ansprüche 6 bis 8, wobei die Leitkammer (7) mittels Einsätzen in mehrere Kanäle segmentiert ist.

10. Kalibriervorrichtung nach einem der Ansprüche 5 bis 9, wobei die Halterung (2) einen Anschlussflansch (3), einen Befestigungsring (4) und einen Zwischenring (5) aufweist.

## Claims

1. A calibration device for use in an extrusion machine for plastic tubes, comprising
- a calibration sleeve (1) with an internal diameter and
- an adjustment device for the stepless adjustment of the internal diameter of the calibration sleeve (1),
wherein the adjustment device comprises a cable adjustment, **characterised in that** the cable adjustment comprises a plurality of cable deflections (12).

2. The calibration device according to claim 1, wherein the cable (11) of the cable adjustment at least partially surrounds the calibration sleeve (1) at its outlet end.

3. The calibration device according to claim 2, wherein the cable (11) is guided at the outlet end in a groove (14) running on the calibration sleeve (1) in a circumferential direction.

4. The calibration device according to any one of the preceding claims, wherein both ends of the cable (11) of the cable adjustment are affixed to a shared adjustment mechanism (13).

5. The calibration device according to any one of the preceding claims, comprising
a holder (2) for the attachment of the calibration sleeve (1) to a flow-through cooling chamber, wherein a water chamber (6, 7) is constituted between the holder (2) and the calibration sleeve (1),
**characterised in that**
the calibration sleeve (1) comprises a collar (8) projecting radially outwards, which is offset to an inlet-side end face of the calibration sleeve (1), wherein the holder (2) engages with the collar (8) and the water chamber (6, 7) is arranged at least partially in the direction of the inlet side to the collar (8).

6. The calibration device according to any one of the preceding claims, comprising a holder (2) for attaching the calibration sleeve (1) to the flow-through cooling chamber, wherein a water chamber (6, 7) is constituted between the holder (2) and the calibration sleeve (1) **characterised in that**
the water chamber comprises an annular main chamber (6) and a conducting chamber (7) extending from the main chamber (6) along the calibration sleeve (1), wherein water can be introduced into the main chamber (6), which flows out of the main chamber (6) in the conducting chamber (7) along the calibration sleeve (1).

7. The calibration device according to claim 6, wherein the conducting chamber (7) has a height which amounts to a maximum of 5 mm.

8. The calibration device according to claim 7, wherein the conducting chamber (7) has a length which amounts to at least 5 times the height.

9. The calibration device according to any one of claims 6 to 8, wherein the conducting chamber (7) is segmented into a plurality of channels by means of inserts.

10. The calibration device according to any one of claims 5 to 9, wherein the holder (2) comprises a connecting flange (3), a fastening ring (4) and an intermediate ring (5).

## Revendications

1. Dispositif de calibrage pour la mise en oeuvre dans une installation d'extrusion pour des tuyaux en matière plastique, comprenant
- un manchon de calibrage (1) avec un diamètre intérieur et
- un dispositif de réglage pour la mise au point continue du diamètre intérieur du manchon de calibrage (1),
sachant que le dispositif de réglage comprend un réglage par câble, **caractérisé en ce que** le réglage par câble comprend plusieurs renvois de câble (12).

2. Dispositif de calibrage selon la revendication 1, sachant qu'un câble (11) du réglage par câble entoure au moins par endroits le manchon de calibrage (1) à son extrémité de sortie.

3. Dispositif de calibrage selon la revendication 2, sachant que le câble (11) est passé sur l'extrémité de sortie dans une rainure (14) passant sur le manchon de calibrage (1) en direction périphérique.

4. Dispositif de calibrage selon l'une quelconque des revendications précédentes, sachant que les deux extrémités d'un câble (11) du réglage par câble sont placées sur un dispositif de réglage commun (13).

5. Dispositif de calibrage selon l'une quelconque des revendications précédentes, comprenant
une fixation (2) pour le montage du manchon de calibrage (1) sur une chambre de refroidissement continu, sachant qu'une chambre d'eau (6, 7) est constituée entre la fixation (2) et le manchon de calibrage (1),
**caractérisé en ce que**
le manchon de calibrage (1) comporte une collerette (8) faisant saillie radialement vers l'extérieur, qui est déplacée par rapport à une extrémité avant du côté entrée du manchon de calibrage (1), sachant que la fixation (2) vient en prise sur la collerette (8) et la chambre d'eau (6, 7) est disposée au moins en partie en direction du côté entrée par rapport à la collerette (8).

6. Dispositif de calibrage selon l'une quelconque des revendications précédentes, comprenant
une fixation (2) pour le montage du manchon de calibrage (1) sur une chambre de refroidissement continu, sachant qu'une chambre d'eau (6, 7) est constituée entre la fixation (2) et le manchon de calibrage (1),
**caractérisé en ce que**
la chambre d'eau comporte une chambre principale annulaire (6) et une chambre de guidage (7) s'étendant de la chambre principale (6) le long du manchon de calibrage (1), sachant que de l'eau peut être introduite dans la chambre principale (6), laquelle s'écoule de la chambre principale (6) dans la chambre de guidage (7) le long du manchon de calibrage (1).

7. Dispositif de calibrage selon la revendication 6, sachant que la chambre de guidage (7) comporte une hauteur qui est au maximum de 5 mm .

8. Dispositif de calibrage selon la revendication 7, sachant que la chambre de guidage (7) comporte une longueur qui représente au moins 5 fois la hauteur.

9. Dispositif de calibrage selon l'une quelconque des revendications 6 à 8, sachant que la chambre de guidage (7) est segmentée en plusieurs conduits au moyen d'intercalaires.

10. Dispositif de calibrage selon l'une quelconque des revendications 5 à 9, sachant que la fixation (2) comporte une bride de raccordement (3), une bague de fixation (4) et une bague intermédiaire (5).
